# EUROPÄISCHE PATENTSCHRIFT

(11) **EP 1 569 784 B1**
(45) Veröffentlichungstag und Bekanntmachung des Hinweises auf die Patenterteilung: **20.08.2008**
(21) Anmeldenummer: 03788834.4
(22) Anmeldetag: 02.12.2003
(51) Int. Cl.: B29C 49/38, B29C 47/12

(54) **VORRICHTUNG ZUR HERSTELLUNG VON QUERRIPPENROHREN**
DEVICE FOR THE PRODUCTION OF TRANSVERSELY RIBBED PIPES
DISPOSITIF POUR PRODUIRE DES TUBES A NERVURES TRANSVERSALES

(30) Priorität: 09.12.2002 DE 10257365
(43) Veröffentlichungstag der Anmeldung: 07.09.2005
(73) Patentinhaber: UNICOR GmbH, 97437 Hassfurt (DE)
(72) Erfinder: HOFMANN, Günther, 97437 Hassfurt (DE)
(74) Vertreter: Zinsinger, Norbert
(86) Internationale Anmeldenummer: PCT/DE2003/003962
(87) Internationale Veröffentlichungsnummer: WO 2004/052625

(56) Entgegenhaltungen:
- DE-A- 3 118 932
- US-A- 3 280 430
- US-A- 4 725 221
- US-A- 4 824 354

## Beschreibung

Die Erfindung betrifft eine Vorrichtung zur Herstellung von Querrippenrohren mit Formbackenhälften, die entlang zweier Führungsbahnen aneinander anliegend mittels jeweils einer zugehörigen Antriebseinrichtung umlaufend bewegbar sind, wobei die beiden Führungsbahnen eine gemeinsame Formstrecke, jeweils eine Rücklaufstrecke und jeweils zwei Umlenkstrecken aufweisen, wobei die jeweilige Umlenkstrecke ein Umlenkorgan aufweist, das mit einem bogenförmigen Führungsrand für die Formbackenhälften ausgebildet ist und an einem maschinenfesten Basiselement linear beweglich geführt angeordnet und mit einer Kompensationseinrichtung verbunden ist, die ein Toleranzspiel der entlang der zugehörigen Führungsbahn umlaufenden Formbackenhälften ausgleichen kann.

Vorrichtungen zur Herstellung von Querrippenrohren sind in einer Vielzahl Ausbildungen an sich bekannt, sie werden üblicherweise als Corrugatoren bezeichnet.

Bei den bekannten gattungsgemäßen Vorrichtungen ergibt sich infolge der betriebstemperaturbedingten Längenausdehnung der Formbackenhälften die Notwendigkeit, die beiden Führungsbahnen entsprechend zu verlängern, um ein Blockieren der Formbackenhälften entlang den Führungsbahnen zu verhindern. Diese Längeneinstellung der beiden Führungsbahnen geschieht bislang z.B. in der Weise, daß die Umlenkorgane manuell verstellt werden. Diese Verstellung bedingt ein gut geschultes Personal. Während der Verstellung ist die Vorrichtung nicht in Betrieb, so daß die Produktivität reduziert ist.

Eine Vorrichtung der eingangs genannten Art ist beispielsweise aus der DE 31 18 932 C2 bekannt. Bei dieser bekannten Vorrichtung sind die Formbackenhälften an Ketten angebracht, die um Umlenkräder umgelenkt werden, die die Umlenkorgane bilden. Die Umlenkräder weisen einen kreisrunden Umfang auf, sie sind an einem ortsfesten Maschinengestell in der Höhe und quer zur Vorschub-d.h. Produktionsrichtung verstellbar. Diese Verstellung erfolgt manuell.

Eine Vorrichtung der eingangs genannten Art ist auch aus der US 3 280 430 bekannt. Auch bei dieser bekannten Vorrichtung erfolgt die Einstellung der Umlenkräder von Hand.

Die US 4 824 354 offenbart eine hydraulische Presse mit ersten und zweiten Formbacken, die an Riemen angebracht sind. Die Formbacken sind entlang zweier endloser Führungsbahnen mittels einer zugehörigen Antriebseinrichtung umlaufend bewegbar. Die beiden Führungsbahnen bilden eine gemeinsame Formstrecke. Die Umlenkstrecken der beiden Formstrecken weisen jeweils ein Umlenkorgan auf, das von einer Rolle mit einem kreisrunden Umfang gebildet ist. Die Umlenkrollen sind an einem maschinenfesten Gestell federn beweglich angebracht, um die Riemen zu spannen und um temperatur- und/oder geschwindigkeitsabhängige Toleranzen auszugleichen.

Aus der DE 196 19 429 Al ist ebenfalls eine Vorrichtung der eingangs genannten Art bekannt. Bei dieser bekannten Vorrichtung sind die entlang der jeweiligen Führungsbahn umlaufenden Formbackenhälften miteinander mittels Verbindungselementen verbunden, die von Zugfedern gebildet sind. Die Umlenkorgane sind im Einlaufbereich in die Formstrecke mit einem nicht kreisförmigen, sondern mit einem annähernd elliptischen Führungsrand ausgebildet, um eine überschneidende Berührung der Formbackenhälften an ihren Kanten zu vermeiden.

Der Erfindung liegt die Aufgabe zugrunde, eine Vorrichtung der eingangs genannten Art zu schaffen, die einfach ausgebildet ist, bei welcher eine manuelle Verstellung der Umlenkorgane in Anpassung an die jeweiligen Betriebsbedingungen vermieden wird, und die mit einer hohen Produktivität betrieben werden kann.

Diese Aufgabe wird bei einer Vorrichtung der eingangs genannten Art erfindungsgemäß dadurch gelöst, daß das jeweilige Umlenkorgan aus einem verschleißarmen Kunststoffmaterial besteht und das Toleranzspiel von der Temperatur- und/oder von der Geschwindigkeit der Formbackenhälften abhängig ist, daß das jeweilige Umlenkorgan mit einem klothoidenartigen Führungsrand für die zugehörigen Formbackenhälften ausgebildet ist, und daß die Kompensationseinrichtung eine mit Druckluft beaufschlagbare Luftfeder aufweist.

Mit Hilfe der mit dem jeweiligen Umlenkorgan verbundenen Kompensationseinrichtung wird jede betriebstemperaturbedingte Längenänderung der Formbackenhälften automatisch ausgeglichen, indem die zugehörige Führungsbahn an die besagte Längenänderung angepaßt automatisch eingestellt wird. Die Kompensationseinrichtungen dienen gleichzeitig auch dazu, geschwindigkeits- d.h. fliehkraftbedingte Einflüsse der Formbackenhälften entlang den Umlenkorganen automatisch zu kompensieren, d.h. auszugleichen. Durch die erfindungsgemäße Ausbildung der Vorrichtung, d.h. durch die Kombination der die Umlenkstrecken bestimmenden Umlenkorgane mit den Kompensationseinrichtungen ergibt sich der Vorteil, daß manuelle Einstellungen der Umlenkorgane in Anpassung an betriebstemperaturbedingte Längenänderungen der Formbackenhälften nicht erforderlich sind, daß Fliehkrafteinflüsse der Formbackenhälften entlang den Umlenkorganen kompensiert werden, und daß die Produktivität der Vorrichtung verbessert ist.

Dadurch, dass das jeweilige Umlenkorgan mit einem klothoidenartigen Führungsrand für die zugehörigen Formbackenhälften ausgebildet ist, wird eine unerwünschte Sprungbewegung im Übergang zwischen dem jeweiligen Umlenkorgan und der geradlinigen Formstrecke bzw. der geradlinigen Rücklaufstrecke verhindert und auf diese Weise die Produktivität der Vorrichtung verbessert.

Erfindungsgemäß sind die Kompensationseinrichtungen von mit Druckluft beaufschlagbaren Luftfedern gebildet. Eine solche Kompensationseinrichtung ist beispielsweise im Firmenprospekt der Fa. Festo "Fluid Muscle Typ MAS..."0010NH beschrieben.

Als zweckmäßig hat es sich bei der erfindungsgemäßen Vorrichtung erwiesen, wenn das jeweilige Umlenkorgan aus einem verschleißarmen Kunststoffmaterial besteht, bei dem es sich vorzugsweise um ein Kunststoffmaterial mit Öleinlagerungen handelt.

Ein Ausführungsbeispiel der erfindungsgemäßen Vorrichtung bzw. wesentlicher Einzelheiten derselben sind in der Zeichnung dargestellt und werden nachfolgend beschrieben.

Es zeigen:
- Figur 1: abgeschnitten in einer Ansicht von oben eine Ausbildung der Vorrichtung zur Herstellung von Querrippenrohren,
- Figur 2: in einem größeren Maßstab ein Detail der Vorrichtung gemäß Figur 1, d.h. ein Umlenkorgan in Kombination mit einer zugehörigen Kompensationseinrichtung sowie eine Anzahl Formbackenhälften, die aneinander anliegen, und
- Figur 3: eine perspektivische Ansicht des Umlenkorganes gemäß Figur 2 in Blickrichtung von schräg unten in Kombination mit der abgeschnitten dargestellten Kompensationseinrichtung und in Kombination mit einer ebenfalls abgeschnitten dargestellten Formbackenhälfte.

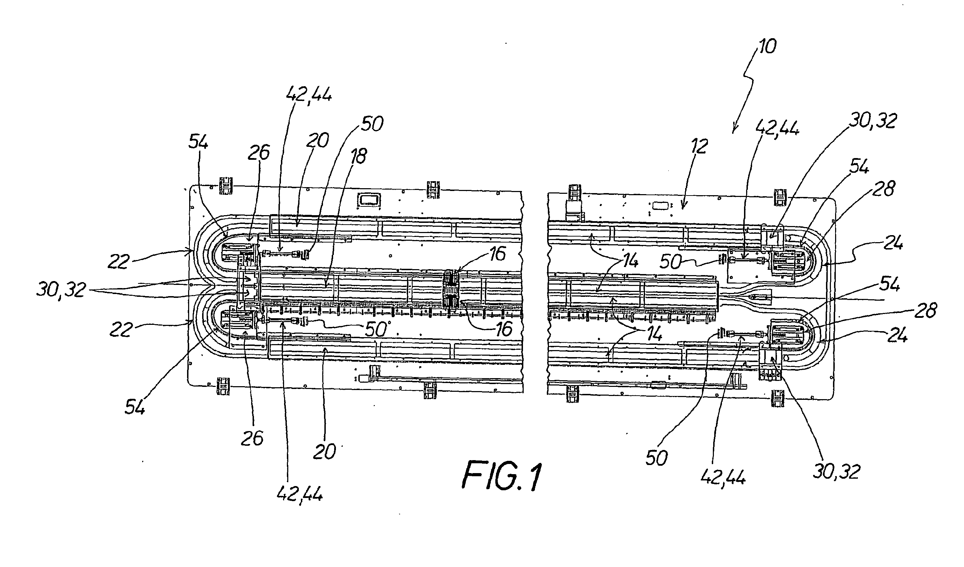

Figur 1 zeigt eine Ausbildung der Vorrichtung 10 zur Herstellung von Querrippenrohren. Die Vorrichtung 10 weist eine Basiseinrichtung 12 mit zwei endlosen Führungsbahnen 14 auf, entlang welchen Formbackenhälften 16 aneinander anliegend umlaufend bewegt werden. In Figur 1 sind nur zwei dieser Formbackenhälften 16 dargestellt. Die beiden Führungsbahnen 14 weisen eine gemeinsame Formstrecke 18 und jeweils eine Rücklaufstrecke 20 auf. Die gemeinsame Formstrecke 18 und die jeweils zugehörige Rücklaufstrecke 20 sind jeweils durch zwei Umlenkstrecken 22 und 24 verbunden. Die Umlenkstrecken 22 weisen jeweils ein Umlenkorgan 26 und die Umlenkstrecken 24 weisen jeweils ein Umlenkorgan 28 auf.

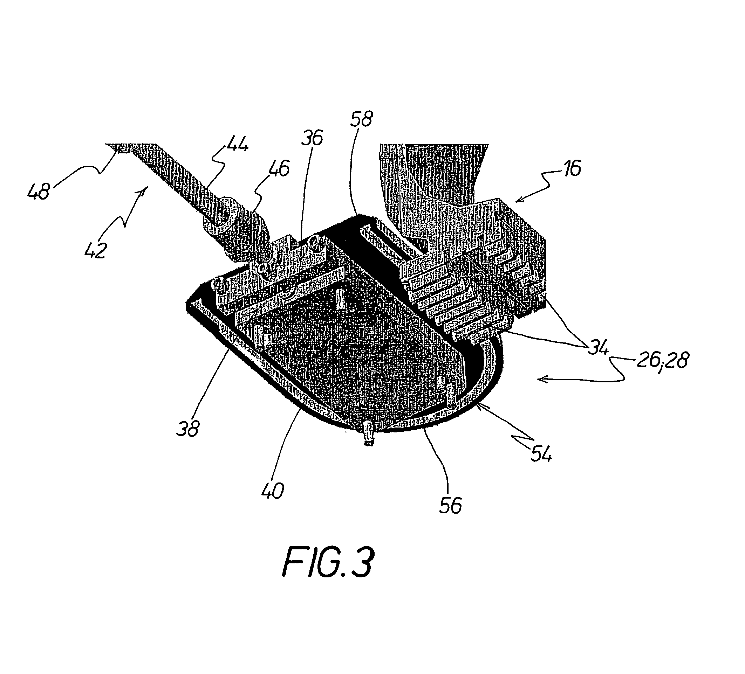

Die entlang der jeweiligen Führungsbahn 14 aneinander eng anliegenden Formbackenhälften 16 werden mit Hilfe einer Antriebseinrichtung 30 angetrieben. Die Antriebseinrichtung 30 weist Zahnräder 32 auf, die mit einer Zahnung 34 (sh. Figur 3) kämmen, die an der Unterseite der jeweiligen Formbackenhälften vorgesehen ist.

Das jeweilige Umlenkorgan 26 bzw. 28 ist an einem Verschiebeelement 36 befestigt, das an einem maschinenfesten Basiselement 38 linear beweglich geführt angebracht ist, wie aus Figur 3 ersichtlich ist. Die lineare Beweglichkeit des Verschiebeelementes 36 in bezug auf das maschinenfeste Basiselement 38 ist in Figur 3 durch den Doppelpfeil 40 verdeutlicht.

Das Verschiebeelement 36 und folglich das jeweils zugehörige Umlenkorgan 26 bzw. 28 sind mit einer Kompensationseinrichtung 42 verbunden. Mit Hilfe der Kompensationseinrichtung 42 wird ein von der Temperatur und/oder von der Geschwindigkeit der Formbackenhälften abhängiges Toleranzspiel der entlang der zugehörigen Führungsbahn 14 umlaufenden Formbackenhälften 16 automatisch ausgeglichen, so daß es nicht erforderlich ist, die Umlenkorgane 26 bzw. 28 manuell zeitaufwendig nachzustellen, um einen entsprechenden Ausgleich zu bewerkstelligen.

Die jeweilige Kompensationseinrichtung 42 ist von einer Luftfeder 44 gebildet. Die Luftfeder 44 weist eine erste Anschlußarmatur 46 und eine zweite Anschlußarmatur 48 auf. Mit der ersten Anschlußarmatur 46 ist die Luftfeder 44 an das Verschiebeelement 36 angeschlossen. Die zweite Anschlußarmatur 48 ist an eine maschinenfeste Konsole 50 angeschlossen. Die zweite Anschlußarmatur 48 weist einen Druckluftanschluß 52 auf. Der Druckluftanschluß 52 ist an eine (nicht gezeichnete) Druckluftquelle anschließbar, um die Luftfeder 44 mit Druckluft eines definierten Überdruckes zu beaufschlagen. Hierdurch ergibt sich eine entsprechende Kontraktion der Luftfeder 44 zwischen ihren Anschlußarmaturen 46 und 48, d.h. eine definierte Verstellung und Verspannung der ersten Anschlußarmatur 46 hin zur maschinenfesten zweiten Anschlußarmatur 48.

Das jeweilige Umlenkorgan 26 bzw. 28 besteht vorzugsweise aus einem verschleißarmen Kunststoffmaterial, das Öleinlagerungen aufweist, um die Reibung der Formbackenhälften 16 entlang des jeweiligen Umlenkorganes 26 bzw. 28 zu minimieren.

Das jeweilige Umlenkorgan 26 bzw. 28 ist mit einem klothoidenartigen Führungsrand 54 ausgebildet, um eine Springbewegung der Formbackenhälften 16 im Übergangsbereich zwischen der jeweiligen geradlinigen Rücklaufstrecke 20, dem jeweiligen Umlenkorgan 26 bzw. 28 und der gemeinsamen geradlinigen Formstrecke 18 zu verhindern. Der klothoidenartige Führungsrand 54 ist von einer klothoidenartigen Führungsrinne 56 gebildet, die im jeweiligen Umlenkorgan 26 bzw. 28 unterseitig ausgebildet ist. Die jeweilige Formbackenhälfte 16 weist zwei Führungsrollen 58 auf, die an die Führungsrinne 56 des jeweiligen Umlenkorganes 26 bzw. 28 spielfrei angepaßt sind.

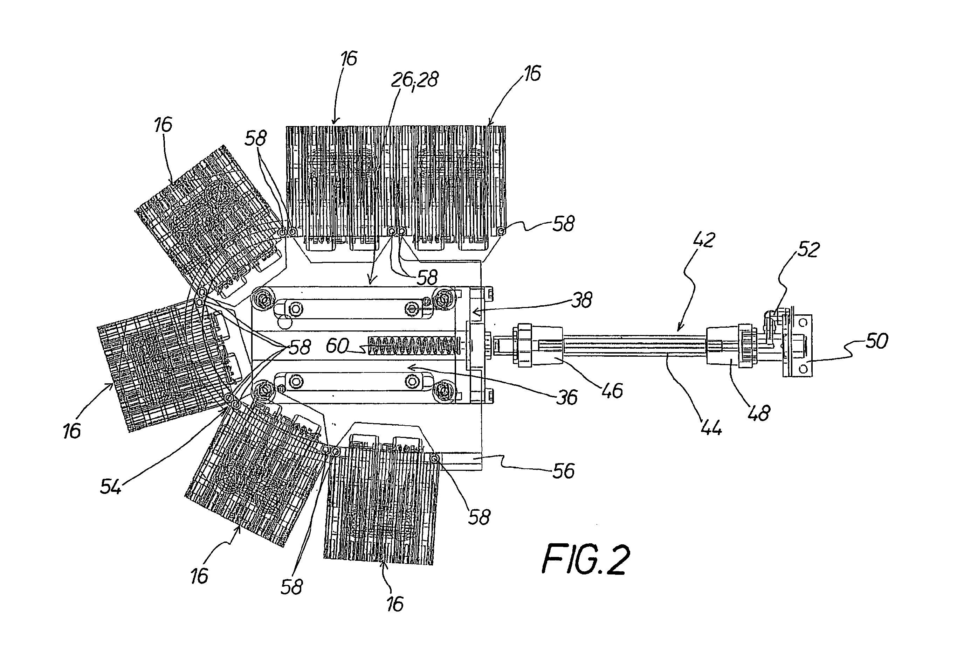

Wie aus Figur 2 ersichtlich ist, ist zwischen dem maschinenfesten Basiselement 38 und dem Verschiebeelement 36 des jeweiligen Umlenkorganes 26 bzw. 28 außerdem ein Federelement 60 vorgesehen, das ein Teil der Kompensationseinrichtung 42 bildet.

Gleiche Einzelheiten sind in den Figuren 1 bis 3 jeweils mit denselben Bezugsziffern bezeichnet, so daß es sich erübrigt, in Verbindung mit diesen Figuren alle Einzelheiten jeweils detailliert zu beschreiben.

## Patentansprüche

1. Vorrichtung zur Herstellung von Querrippenrohren mit Formbackenhälften (16) die entlang zweier Führungsbahnen (14) aneinander anliegend mittels jeweils einer zugehörigen Antriebseinrichtung (30) umlaufend bewegbar sind, wobei die beiden Führungsbahnen (14) eine gemeinsame Formstrecke (18), jeweils eine Rücklaufstrecke (20) und jeweils zwei Umlenkstrecken (22; 24) aufweisen, wobei die jeweilige Umlenkstrecke (22; 24) ein Umlenkorgan (26; 28) aufweist, das mit einem bogenförmigen Führungsrand (54) für die Formbackenhälften (16) ausgebildet ist und an einem maschinenfesten Basiselement (38) linear beweglich geführt angeordnet und mit einer Kompensationseinrichtung (42) verbunden ist, die ein Toleranzspiel der entlang der zugehörigen Führungsbahn (14) umlaufenden Formbackenhälften (16 ausgleichen kann,
**dadurch gekennzeichnet,**
**daß** das jeweilige Umlenkorgan (26; 28) aus einem verschleißarmen Kunststoffmaterial besteht und das Toleranzspiel von der Temperatur- und/oder von der Geschwindigkeit der Formbackenhälften (16) abhängig ist, daß das jeweilige Umlenkorgan (26; 28) mit einem klothoidenartigen Führungsrand (54) für die zugehörigen Formbackenhälften (16) ausgebildet ist, und daß die Kompensationseinrichtung (42) eine mit Druckluft beaufschlagbare Luftfeder (44) aufweist.

2. Vorrichtung nach Anspruch 1,
**dadurch gekennzeichnet ,**
**daß** das Kunststoffmaterial Öleinlagerungen aufweist.

## Claims

1. Apparatus for producing transversely ribbed pipes, comprising mould block halves (16) which can be moved in a circulating manner bearing against one another along two guideways (14) by means of a respective associated drive device (30), the two guideways (14) having a common moulding section (18), a respective return section (20) and two respective deflection sections (22; 24), the respective deflection section (22; 24) having a deflection member (26; 28) which is formed with a curved guide edge (54) for the moulding block halves (16) and is arranged such as to be linearly movable on a base element (38) fixed to the machine and is connected to a compensation device (42) which can compensate for tolerance of the mould block halves (16) circulating along the associated guideway (14), **characterized in that** the respective deflection member (26; 28) is made of a plastic material having a low rate of wear and the tolerance is dependent on the temperature and/or on the speed of the mould block halves (16), **in that** the respective deflection member (26; 28) is formed with a clothoid-like guide edge (54) for the associated moulding block halves (16), and **in that** the compensation device (42) has a pneumatic spring (44) which can be pressurized with compressed air.

2. Apparatus according to Claim 1, **characterized in that** the plastic material has oil inclusions.

## Revendications

1. Dispositif de réalisation de tubes à nervures transversales avec des demi-empreintes (16) qui peuvent être déplacées dans le sens périphérique de manière adjacente le long de deux voies de guidage (14) chacune au moyen d'un dispositif d'entraînement (30) associé, les deux voies de guidage (14) comportant un tronçon commun (18), respectivement un tronçon de retour (20) et respectivement deux tronçons de renvoi (22 ; 24), le tronçon de renvoi (22 ; 24) respectif comportant un organe de renvoi (26 ; 28), qui est configuré avec un bord de guidage (54) courbe pour les demi-empreintes (16) et qui est monté de manière linéairement mobile sur un élément de base (38) solidaire de la machine et est relié à un dispositif de compensation (42), qui peut compenser un jeu de tolérances des demi-empreintes (16) tournant le long de la voie de guidage (14) associée,
**caractérisé en ce que** l'organe de renvoi (26 ; 28) respectif est réalisé dans une matière plastique à faible usure et le jeu de tolérances dépend de la température et/ou de la vitesse des demi-empreintes (16), **en ce que** l'organe de renvoi (26 ; 28) respectif est configuré avec un bord de guidage (54) en forme de clothoïde pour les demi-empreintes (16) associées, et **en ce que** le dispositif de compensation (42) comporte un amortisseur pneumatique (44) apte à être sollicité par air comprimé.

2. Dispositif selon la revendication 1, **caractérisé en ce que** la matière plastique comporte des inclusions d'huile.
